# EUROPÄISCHE PATENTSCHRIFT

(11) **EP 4 404 440 B1**
(45) Veröffentlichungstag und Bekanntmachung des Hinweises auf die Patenterteilung: **12.08.2026**
(21) Anmeldenummer: 24180789.0
(22) Anmeldetag: 14.01.2021
(51) Int. Cl.: E01C 19/28, E01C 19/38, H02K 7/06

(54) **BODENVERDICHTUNGSVORRICHTUNG MIT UNWUCHTERREGER**
SOIL COMPACTING DEVICE WITH UNBALANCE EXCITER
DISPOSITIF DE COMPACTAGE DE SOL AVEC EXCITATEUR À BALOURDS

(30) Priorität: 15.01.2020 DE 102020100842
(43) Veröffentlichungstag der Anmeldung: 24.07.2024
(62) Dokumentnummer(n) der früheren Anmeldung(en) nach Art. 76 EPÜ: 21151631.5 / 3 851 583
(73) Patentinhaber: Wacker Neuson Produktion GmbH & Co. KG, 85084 Reichertshofen (DE)
(72) Erfinder: STEFFEN, Michael, 80796 München (DE)
(74) Vertreter: Müller Hoffmann & Partner

(56) Entgegenhaltungen:
- DE-A1- 2 163 019
- DE-A1- 2 407 721
- DE-C- 923 017
- DE-T5- 112016 000 636
- US-A- 6 025 668
- US-A1- 2003 108 389

## Beschreibung

Die Erfindung betrifft eine Bodenverdichtungsvorrichtung mit einem Unwuchterreger.

Derartige Bodenverdichtungsvorrichtungen werden häufig auch als Vibrationsplatten oder Rüttelplatten bezeichnet. Sie weisen üblicherweise eine Obermasse und eine relativ zu der Obermasse bewegbare Untermasse auf. Meist werden derartige Vibrationsplatten durch einen Verbrennungsmotor angetrieben, der dann der Obermasse zugerechnet wird. An der Untermasse ist eine Bodenkontaktplatte vorgesehen, mit der der darunter befindliche Boden verdichtet werden kann.

Die Bodenkontaktplatte wird dabei durch einen Unwuchterreger mit einer Unwuchtkraft und damit einer Schwingung beaufschlagt, um die gewünschte Bodenverdichtung zu bewirken. Der Unwuchterreger und die Bodenkontaktplatte werden somit der Untermasse zugerechnet.

Zwischen der Obermasse und der Untermasse ist eine Schwingungsentkopplungsvorrichtung, zum Beispiel eine Federeinrichtung mit Hilfe von Gummipuffern, vorgesehen, damit die an der Untermasse erzeugten starken Schwingungen nur in möglichst geringem Maße auf die Oberseite übertragen werden.

Der Unwuchterreger weist häufig eine oder mehrere Unwuchtwellen auf, die eine Unwuchtmasse tragen, um bei Rotation der Unwuchtwellen bzw. Unwuchtmassen die gewünschte Schwingungswirkung zu erzielen. Um die Unwuchtwelle bzw. die mehreren Unwuchtwellen in Rotation zu versehen, wird die Antriebsenergie des Antriebsmotors in geeigneter Weise übertragen. Zum Beispiel kann bei kleineren Vibrationsplatten ein Riementrieb zwischen dem an der Oberseite befindlichen Verbrennungsmotor und dem an der Untermasse befindlichen Unwuchterreger vorgesehen sein. Bei größeren, leistungsfähigeren Vibrationsplatten wird häufig ein Hydrauliksystem zum Übertragen der Antriebsenergie genutzt.

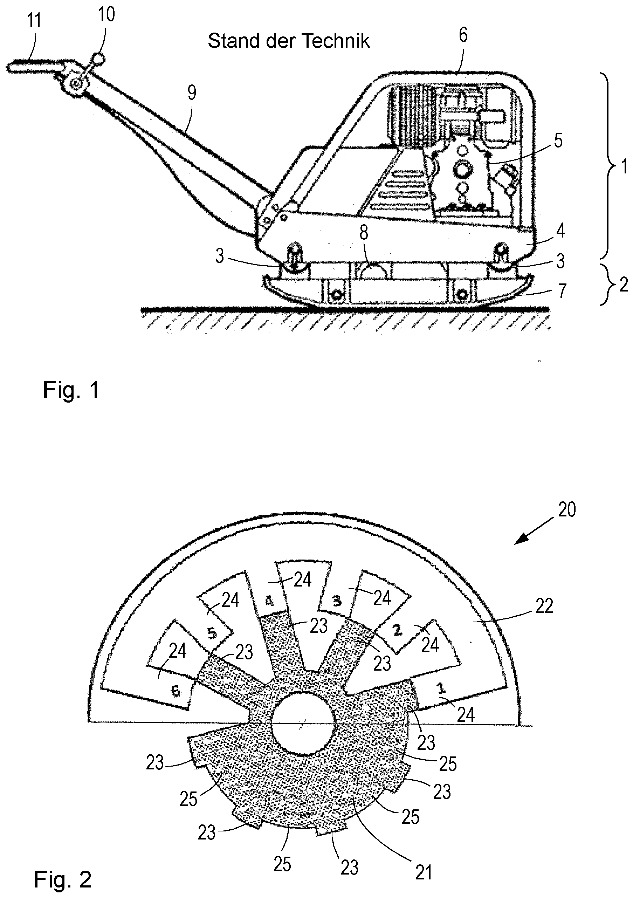

Fig. 1 zeigt ein Beispiel für eine als Bodenverdichtungsvorrichtung dienende, aus dem Stand der Technik bekannte Vibrationsplatte.

Die Vibrationsplatte weist eine Obermasse 1 und eine relativ zu der Obermasse 1 bewegliche Untermasse 2 auf. Die Untermasse 2 ist über als Schwingungsentkopplungsvorrichtung dienende Gummipuffer 3 mit der Obermasse 1 gekoppelt. Auf diese Weise werden die an der Untermasse 2 entstehenden, starken Schwingungen nur gedämpft auf die Obermasse 1 übertragen.

Die Obermasse 1 weist einen Tragrahmen 4 auf, auf dem in dem gezeigten Beispiel ein Verbrennungsmotor 5 gehalten ist, der ebenfalls der Obermasse 1 zugerechnet wird. Der Verbrennungsmotor 5 ist von einem Schutzrahmen 6 umschlossen.

Die Untermasse 2 weist eine Bodenkontaktplatte 7 auf, mit deren Hilfe der darunter befindliche Boden verdichtet werden kann. Auf der Oberseite der Bodenkontaktplatte ist ein ebenfalls zur Untermasse 2 gehörender Schwingungserreger bzw. Unwuchterreger 8 angeordnet.

Der Unwuchterreger 8 weist wenigstens eine, häufig aber auch zwei oder mehr Unwuchtwellen auf, die von dem Verbrennungsmotor 5 drehend angetrieben werden. Aufgrund der von den Unwuchtwellen getragenen Unwuchtmassen entstehen starke Zentrifugalkräfte, die zu entsprechenden Vibrationen der Bodenkontaktplatte 7 und damit der gesamten Untermasse 2 führen. Diese Vibrationen sind erwünscht und dienen zur wirksamen Verdichtung des Bodens.

Zur Übertragung der Antriebsenergie vom Verbrennungsmotor 5 zum Unwuchterreger 8 haben sich insbesondere zwei Prinzipien durchgesetzt. Bei kleineren Vibrationsplatten wird in der Regel ein Keilriementrieb zwischen Verbrennungsmotor 5 und Unwuchterreger 8 und damit zwischen Obermasse 1 und Untermasse 2 vorgesehen. Bei größeren, leistungsfähigeren Vibrationsplatten betreibt der Verbrennungsmotor 5 eine Hydraulikpumpe, so dass ein Hydraulikfluid unter hohen Druck versetzt werden kann. An dem Unwuchterreger 8 ist dann ein Hydraulikmotor vorgesehen, der mit dem Hydraulikdruck betrieben wird, um die im Unwuchterreger 8 vorhandenen Unwuchtwellen in Rotation zu versetzen.

Zum Führen der in Fig. 1 gezeigten Vibrationsplatte ist zudem eine Führungsdeichsel 9 an der Obermasse 2 bzw. dem Tragrahmen 4 befestigt. An der Führungsdeichsel 9 ist ein Gashebel 10 zum Beeinflussen der Motordrehzahl des Verbrennungsmotors vorgesehen. Zudem ist am oberen Ende der Führungsdeichsel 9 ein Steuergriff 11 angeordnet, über den in bekannter Weise die relative Drehstellung der Unwuchtwellen in Unwuchterreger 8, insbesondere deren Phasenlage, zueinander, verstellt werden kann. Auf diese Weise kann eine Vorwärts- und Rückwärtsfahrt der Vibrationsplatte in an sich bekannter Weise erreicht werden.

Anstelle des Verbrennungsmotors 5 ist es auch bekannt, einen Elektromotor einzusetzen. Ebenso sind im Stand der Technik Vibrationsplatten bekannt, bei denen der Elektromotor direkt auf der Untermasse 2, nämlich insbesondere auf der Bodenkontaktplatte 7 nahe dem Unwuchterreger 8 angebracht ist, um die eine oder die mehreren Unwuchtwellen im Unwuchterreger 8 anzutreiben.

Wenn der Elektromotor auf der Untermasse der Vibrationsplatte verbaut ist, übernehmen der Elektromotor und der Unwuchterreger (Schwingungserreger) unterschiedliche Aufgaben. Der Elektromotor erzeugt das Drehmoment zum Antrieb der Unwuchten, während die rotierenden Unwuchten des Unwuchterregers die zur Bewegung der Vibrationsplatte notwendigen Kräfte erzeugen.

Mit steigender Leistung von elektromotorisch betriebenen Vibrationsplatten erhöhen sich dementsprechend Masse und Volumen der Motoren und Unwuchten, was dazu führt, dass das Bauvolumen insgesamt deutlich erhöht wird.

Aus der DE 21 63 019 A1 ist ein elektrisch angetriebener Unwuchtvibrator bekannt, mit einem als Käfigläufer ausgeführten Unwuchtrotor. Der Unwuchtrotor weist ein Blechpaket auf, das in Form einer sich über einen Winkelbereich von weniger als 180° erstreckenden, nach außen offenen, längslaufenden Nut ausgespart ist.

In der DE 24 07 721 A1 wird ein anderer elektrisch angetriebener Unwuchtvibrator mit ähnlichem Aufbau offenbart.

Die DE 11 2016 000 636 T5 zeigt eine Schwingungsvorrichtung für Vibrationsverdichter.

Aus der US 2003/108389 A1 ist ein System zum elektrischen Antreiben und Vibrieren einer Bodenverdichtungswalze bekannt.

In der US 6 025 668 A wird allgemein ein Reluktanzmotor mit gefurchten Statorpolen beschrieben.

Die DE 923 017 C zeigt einen durch einen Elektromotor angetriebenen mechanischen Schwingungserreger, bei dem eine umlaufende Unwucht vorgesehen ist, die durch Verstellen einer gegenüber dem umlaufenden Teil beweglichen Masse veränderbar ist.

Der Erfindung liegt die Aufgabe zugrunde, eine durch einen Elektromotor angetriebene Bodenverdichtungsvorrichtung anzugeben, die einen gegenüber dem Stand der Technik vereinfachten und kompakteren Aufbau aufweist.

Die Aufgabe wird gelöst durch eine Bodenverdichtungsvorrichtung gemäß Anspruch 1. Vorteilhafte Ausgestaltungen sind in den abhängigen Ansprüchen angegeben.

Es wird ein Unwuchterreger für eine Bodenverdichtungsvorrichtung angegeben, mit einem Elektromotor, der einen Rotor und einen den Rotor wenigstens teilweise umschließenden Stator aufweist, wobei der Rotor eine Unwuchtmasse aufweist, die wenigstens teilweise bei einer Rotation des Rotors an einer Innenseite des Stators vorbeibewegbar ist.

Somit wird der Rotor nicht nur als Teilkomponente des Elektromotors ausgestaltet, sondern dient gleichzeitig auch als Unwuchtwelle, die die Unwuchtmasse trägt, um damit die gewünschten Schwingungskräfte beim Betrieb des Motors zu erzeugen. Insbesondere kann der Rotor somit gleichzeitig als Antriebswelle des Elektromotors und als Unwucht dienen. Dementsprechend kann der Rotor auch als "UnwuchtRotor" bezeichnet werden.

Der Stator kann als magnetischer Erreger des Rotors ausgebildet sein.

Auf diese Weise wird ein Unwuchterreger angegeben, der besonders kompakt aufgebaut ist, da die Komponenten Antriebsmotor und Unwuchterreger nicht mehr getrennt voneinander vorgesehen sind, sondern durch eine Einheit gebildet werden.

Aufgrund der in den Rotor des Elektromotors integrierten Unwuchtmasse ist keine zusätzliche, vom Elektromotor anzutreibende Unwuchtwelle erforderlich.

Die Unwuchtmasse ist wenigstens teilweise bei einer Rotation des Rotors an der Innenseite des Stators vorbei bewegbar. Das bedeutet, dass zumindest ein Teil der Unwuchtmasse nicht axial versetzt zum Stator angeordnet ist, sondern vielmehr axial auf gleicher Höhe angeordnet ist wie der Stator. Dieser zum Rotor gehörende Teil der Unwuchtmasse bewegt sich somit durch den vom Stator umschlossenen Raum.

Zwar kann darüber hinaus ein weiterer Teil der Unwuchtmasse auch noch axial versetzt zum Stator angeordnet sein, also außerhalb des vom Stator umschlossenen Raumes. Für die Erfindung wesentlich ist es jedoch, dass ein erheblicher Teil der Unwuchtmasse in den Elektromotor integriert, also vom Stator umschlossen ist.

Der Rotor kann über einen Teil seines Umfangs eine zusätzliche Masse als Unwuchtmasse aufweisen, zu der bezüglich der Rotationsachse des Rotors gegenüberliegend keine Gegenmasse zum Ausgleich der Unwuchtmasse vorgesehen ist. Das Prinzip der Unwuchtmasse besteht darin, dass sie für den Rotor ein Massenungleichgewicht erzeugt. Nur dann kann bei einer Rotation des Rotors die gewünschte Unwucht bewirkt werden, die zur Erzeugung der Vibrationen erforderlich ist.

Die die Unwuchtmasse bewirkende zusätzliche Masse am Rotor kann wenigstens 5% der Gesamtmasse des Rotors betragen. Nur dann, wenn diese zusätzliche Masse erheblich ist, also wenigstens 5% der Gesamtmasse des Rotors ausmacht, kann im Betrieb die gewünschte Unwuchtkraft und damit Schwingungswirkung erzielt werden. Bei Varianten können auch noch größere Unwuchtmassen zugrunde gelegt werden, zum Beispiel wenigstens 10% oder wenigstens 15% der Gesamtmasse des Rotors.

Der Rotor weist am Umfang verteilt mehrere Rotor-Pole auf, wobei der Stator über einen Kreisbogen verteilt mehrere Stator-Pole aufweist, um im Zusammenwirken mit den Rotor-Polen eine elektromotorische Funktion zu verwirklichen. Es erübrigt sich an dieser Stelle, auf die Einzelheiten des Aufbaus von an sich bekannten und für den vorliegenden Anwendungsfall geeigneten Elektromotoren (zum Beispiel Reluktanzmotoren, insbesondere geschaltete Reluktanzmotoren, Synchronmotoren, Asynchronmotoren) im Einzelnen einzugehen, da sie vielfältig bekannt sind.

Gegebenenfalls sind darüber hinaus geeignete Steuereinrichtungen, Frequenzumformer etc. erforderlich, um die elektromotorische Funktion zu verwirklichen.

Die Unwuchtmasse kann als Masse ausgebildet sein, die sich über einen Teil des Umfangs des Rotors erstreckt, wobei auch in dem Umfangsbereich des Rotors, in dem die Unwuchtmasse vorgesehen ist, wenigstens ein Rotor-Pol ausgebildet ist. Das bedeutet, dass die Unwuchtmasse am Umfang die zu Erreichung der elektromotorischen Funktion notwendigen Rotor-Pole aufweist. Zusätzlich können an oder zwischen einem Teil dieser Rotor-Pole Massenelemente vorgesehen sein, um auf diese Weise die Unwuchtmasse am Rotor zu bilden.

Auch in dem Umfangsbereich des Rotors, in dem keine Unwuchtmasse vorgesehen ist, kann wenigstens ein Rotor-Pol ausgebildet sein. Hier entspricht der Aufbau des Rotors einem "klassischen" Rotor, der in diesem Bereich keine zusätzliche Unwuchtmasse trägt.

Der Rotor kann einteilig aus einem weichmagnetischen Material ausgebildet sein. Bei diesem weichmagnetischen Material kann es sich insbesondere um Eisen handeln, das auch vorteilhafterweise eine hohe Dichte aufweist, um eine starke Vibrationswirkung durch die Unwuchtmasse beim Betrieb des Rotors zu bewirken.

Alternativ kann der Rotor auch aus verschiedenen Komponenten zusammengebaut sein, so dass die Komponenten "Pole" und "Unwuchtmasse" aus unterschiedlichen Materialien hergestellt sein können. Insbesondere können die Unwuchtmassen zum Beispiel in Form von Stahlkörpern ausgebildet sein, die in geeigneter Weise, zum Beispiel durch Schraubverbindungen, an dem eigentlichen, die Pole aufweisenden Rotor angebracht werden. Umgekehrt kann auch ein Stahlkörper als Basis die Unwuchtmassen aufweisen, wobei die Pole aus weichmagnetischem Material in geeigneter Weise an dem Stahlkörper befestigt sind und von diesem getragen werden. Dabei können die Pole z.B. auch aus einem Elektroblech hergestellt sein.

Erfindungsgemäß umgibt der Stator den Rotor nur über ein Kreissegment am Umfang.

Der Stator ist in diesem Fall als Teilstator ausgebildet, zum Beispiel als Hohlzylindersegment. Im Querschnitt weist der Stator dann prinzipiell die Form eines Kreissegments auf.

Dabei kann sich der Stator am Umfang des Rotors über einen geeigneten Winkel erstrecken, zum Beispiel über einen Winkel von bis zu 180°. Möglich ist zum Beispiel auch ein Winkelbereich von 90 bis 270°.

Für den Betrieb des Elektromotors ist es somit nicht zwingend erforderlich, dass der Stator den Rotor am Umfang vollständig umschließt. Es kann ausreichen, dass die vom Stator aufzubringenden elektromagnetischen Felder nur über einen Teilumfang erzeugt werden.

Die Stator-Pole können dabei über den Innenumfang des Stators verteilt sein.

Als besonders vorteilhaft hat es sich erwiesen, wenn der Elektromotor als Reluktanzmotor ausgebildet ist. Zwar sind - wie oben bereits erläutert - auch andere Motorprinzipien möglich, aber der Reluktanzmotor hat sich prinzipbedingt als besonders vorteilhaft erwiesen.

Bei einem Reluktanzmotor wird das Drehmoment im Rotor ausschließlich durch die Reluktanzkraft erzeugt, so dass der Motor weder mit Permanentmagneten bestückt ist noch elektrische Windungen aufweist. Dadurch entfallen prinzipbedingt auch jede Art von verschleißanfälligen Schleifringen und Bürsten. Der Rotor besitzt ausgeprägte Pole und besteht aus einem hochpermeablen, weichmagnetischen Material wie zum Beispiel Elektroblech.

Dass der Reluktanzmotor im Vergleich zu permanentmagnetisch erregten Maschinen wie dem Synchronmotor eine geringe Drehmomentdichte aufweist, ist für den Anwendungsfall in einem Unwuchterreger unproblematisch. Dort muss lediglich die Unwuchtmasse auf die gewünschte Drehzahl gebracht und dort gehalten werden. Nach einem Anlaufen des Unwuchterregers reicht das Nenndrehmoment des Reluktanzmotors aus, um die Drehzahl zu halten.

Zur Steuerung des Reluktanzmotors ist in der Regel ein Frequenzumrichter vorgesehen, der auch einen direkten Anlauf des Motors ermöglicht.

Erfindungsgemäß wird der beschriebene Unwuchterreger bei einer Bodenverdichtungsvorrichtung eingesetzt Die Bodenverdichtungsvorrichtung weist eine Obermasse und eine relativ zu der Obermasse bewegbare Untermasse mit einer Bodenkontaktplatte zur Bodenverdichtung auf. Zwischen der Obermasse und der Untermasse kann eine Schwingungsentkopplungsvorrichtung angeordnet sein, um die Vibrationen der Untermasse nicht oder nur in geringem Umfang auf die Obermasse zu übertragen. An der Untermasse ist ein Unwuchterreger in der oben beschriebenen Art angeordnet, zum Beaufschlagen der Bodenkontaktplatte mit einer Unwuchtkraft.

Bei einer derartigen Bodenverdichtungsvorrichtung kann es sich insbesondere um eine Vibrationsplatte oder Rüttelplatte handeln, mit der in effektiver Weise Boden verdichtet bzw. Steine in einen Boden eingerüttelt werden können.

Die Bodenverdichtungsvorrichtung kann als handgeführte Bodenverdichtungsvorrichtung ausgebildet sein, wobei in diesem Fall vorzugsweise an der Oberseite eine Führungseinrichtung, zum Beispiel eine Deichsel, angebracht ist, über die der Bediener die Bodenverdichtungsvorrichtung führen kann. Bei einer Variante kann die Bodenverdichtungsvorrichtung auch ferngesteuert werden, wo dass dann keine Führungsdeichsel erforderlich ist. Insbesondere durch die von dem Unwuchterreger erzeugten Unwucht- bzw. Vibrationskräfte kann eine Fahrbewegung (vorwärts, rückwärts) und auch eine Lenkbewegung (Linksdrehung, Rechtsdrehung) der Bodenverdichtungsvorrichtung erreicht werden.

Die Untermasse kann bei einer Variante wenigstens zwei Unwuchterreger aufweisen, die unabhängig voneinander durch eine Steuereinrichtung ansteuerbar sein können. Dabei ist es auch möglich, dass in einem Unwuchterreger mehrere Elektromotoren mit Rotoren und diesen zugeordneten Unwuchtmassen vorgesehen sind, deren Rotation jeweils individuell ansteuerbar ist. Auf diese Weise ist es möglich, dass jeder der Unwuchterreger bzw. jeder der Unwucht-Rotoren eine unterschiedliche Unwuchtkraft erzeugt, um auf diese Weise die Bodenverdichtungsvorrichtung zu lenken.

Zu diesem Zweck kann die Steuereinrichtung ausgebildet sein, um eine elektrische Ansteuerung der Elektromotoren in den Unwuchterregern zu ermöglichen.

Insbesondere können durch die Steuereinrichtung unterschiedliche Drehstellungen der jeweiligen Rotoren in den Unwuchterregern bewirkbar sein. Als Drehstellung ist dabei die jeweilige Winkelstellung der einem Rotor zugeordneten Unwuchtmasse, also insbesondere des Schwerpunkts der Unwuchtmasse zu verstehen. Wenn zum Beispiel zwei Rotoren auf einer Bodenkontaktplatte axial nebeneinander angeordnet sind, kann bereits durch geringfügige unterschiedliche Drehstellungen der Rotoren zueinander (Phasenlage) und damit der von ihnen getragenen Unwuchtmassen ein Drehmoment um die Hochachse (Gierachse) der Bodenkontaktplatte und damit der Bodenverdichtungsvorrichtung bewirkt werden, das wiederum eine Drehung der Bodenverdichtungsvorrichtung um die Hochachse erzeugt. Auf diese Weise kann die Bodenverdichtungsvorrichtung in einfacher Weise gelenkt werden.

Bei einer Variante der Bodenverdichtungsvorrichtung kann der Unwuchterreger auf einer Oberseite der Bodenkontaktplatte angeordnet sein. Dies ermöglicht eine besonders effektive Einleitung der von dem Unwuchterreger erzeugten Schwingungen in die Bodenkontaktplatte, um eine wirksame Bodenverdichtung zu erreichen.

Die Bodenkontaktplatte kann an ihrer Oberseite eine Ausnehmung aufweisen, wobei der Rotor des Unwuchterregers derart auf der Bodenkontaktplatte positioniert sein kann, dass er wenigstens teilweise in die Ausnehmung hineinragt.

Als Ausnehmung kann dabei auch ein Zwischenraum zwischen zwei oder mehreren Verstärkungsrippen verstanden werden. Derartige Rippen werden häufig auf der Oberseite von Bodenkontaktplatten vorgesehen, wobei die Bodenkontaktplatten meist als Gussteile oder Schweißkonstruktionen hergestellt werden.

Der Unwuchterreger kann dementsprechend derart auf der Oberseite der Bodenkontaktplatte angeordnet werden, dass ein Teil des Rotors (der untere Teil des horizontal liegenden Rotors) in die entsprechende Ausnehmung bzw. den Zwischenraum zwischen den Verstärkungsrippen hineinragen kann. Auf diese Weise kann der Rotor zumindest teilweise in der Bodenkontaktplatte versenkt werden, so dass die Bauhöhe deutlich reduziert werden kann. Der Rotor wird möglichst dicht an die Unterseite der Bodenkontaktplatte herangerückt.

Eine Wandstärke zwischen einem Boden der Ausnehmung und einer Unterseite der Bodenkontaktplatte kann in einem Bereich von 10 mm bis 30 mm, z.B. bei ca. 20 mm, liegen. Damit ist es möglich, die Position des Rotors sehr niedrig anzuordnen und die Bauhöhe gering zu halten.

Ein Abstand einer Mantelfläche eines den Rotor umschreibenden virtuellen Zylinders zu einer Unterseite der Bodenkontaktplatte kann in einem Bereich von 10 mm bis 80 mm, z.B. zwischen 30 mm und 40 mm, z.B. bei ca. 35 mm liegen. Der virtuelle Zylinder umschreibt somit den Rotor bzw. den vom Rotor im Rotationsbetrieb beanspruchten Raum. Der Abstand der Mantelfläche dieses virtuellen Zylinders sollte möglichst gering sein, um die Bauhöhe niedrig zu halten und die Schwingungen effektiv in die Bodenkontaktplatte einzuleiten.

Die Bodenkontaktplatte bildet einen Teil eines Gehäuses des Unwuchterregers.

Dabei bildet die Bodenkontaktplatte insbesondere den unteren Teil des Gehäuses, während ein oberer Teil des Gehäuses in der Art eines Deckels auf der Oberseite der Bodenkontaktplatte befestigt werden kann. Dementsprechend ist an Unterseite des Erregers keine eigene Gehäusekomponente erforderlich, so dass Bauaufwand, Material- und Herstellkosten gespart werden können.

Dadurch, dass die Bodenkontaktplatte selbst ein Teil des Gehäuses des Unwuchterregers sein kann (hier insbesondere der untere Teil des Gehäuses), ist es zudem möglich, die Position des Rotors möglichst nach unten zu verlegen.

Mit den hier beschriebenen Maßnahmen ist es möglich, auch bei einem elektromotorisch betriebenen Unwuchterreger der oben beschriebenen Art einen kompakten Aufbau des Unwuchterregers auf der Bodenkontaktplatte zu erreichen. Ansonsten würde der den Unwuchterreger antreibende Elektromotor viel Bauraum einnehmen und bewirken, dass der Rotor mit der Unwuchtmasse mit erheblichem Abstand zu der verdichtungswirksamen Unterseite der Bodenkontaktplatte angeordnet wäre.

Diese und weitere Vorteile und Merkmale der Erfindung werden nachfolgend anhand eines Beispiels unter Zuhilfenahme der begleitenden Figuren erläutert. Es zeigen:
- **Fig. 1**: ein Beispiel für eine aus dem Stand der Technik bekannte Vibrationsplatte;
- **Fig. 2**: einen schematischen Schnitt durch einen erfindungsgemäßen Unwuchterreger;
- **Fig. 3**: ein nicht zur Erfindung gehörendes Beispiel für einen auf einer Bodenkontaktplatte montierten Unwuchterreger;
- **Fig. 4**: ein anderes Beispiel für einen auf einer Bodenkontaktplatte montierten Unwuchterreger; und
- **Fig.** 5: in schematischer Darstellung eine Erläuterung des Abstands des Rotors bzw. dessen virtueller Mantelfläche zur Unterseite einer Bodenkontaktplatte.

Der prinzipielle Aufbau einer Vibrationsplatte wurde bereits oben anhand von Fig. 1 zum Stand der Technik erläutert.

Erfindungsgemäß ist an Stelle des bei der Vibrationsplatte von Fig. 1 vorhandenen Verbrennungsmotors 5 ein elektromotorischer Antrieb vorgesehen, der zusammen mit dem Unwuchterreger 8 in eine Baueinheit integriert ist. Eine erfindungsgemäße Vibrationsplatte unterscheidet sich somit von der in Fig. 1 gezeigten Vibrationsplatte vor allem dadurch, dass ein elektromotorischer Antrieb vorgesehen ist und dass der elektromotorische Antrieb und der Unwuchterreger eine integrierte, gemeinsame Baueinheit aufweisen.

Fig. 2 zeigt dabei einen prinzipiellen schematischen Querschnitt durch einen erfindungsgemäßen Unwuchterreger 20, der gleichermaßen auch als Elektromotor ausgebildet ist.

Der erfindungsgemäße Unwuchterreger 20 weist einen Rotor 21 und einen Stator 22 auf. Wie Fig. 2 zeigt, umschließt der Stator 22 den Rotor 21 nicht vollständig hülsenartig über 360° am Umfang. Vielmehr ist der Stator 22 als Teilstator in Form einer halbzylindrischen Hülse ausgebildet und erstreckt sich nur über einen Winkel von 180°.

Am Umfang des Rotors 21 sind mehrere Rotor-Pole 23 (im gezeigten Beispiel insgesamt acht Rotor-Pole) ausgebildet. Demgegenüber sind am Stator mehrere Stator-Pole 24 (im gezeigten Beispiel insgesamt sechs Stator-Pole) am (Halb-)Umfang verteilt. Die Stator-Pole 24 sind in Fig. 2 mit den Nummern 1 bis 6 durchnummeriert.

Bei dem in Fig. 2 gezeigten Rotor 21 sind im unteren Bereich die Zwischenräume zwischen den Rotor-Polen 23 durch einstückig mit den Rotor-Polen 23 verbundene zusätzliche Massen 25 aufgefüllt (im gezeigten Beispiel insgesamt vier Massen 25), die gemeinsam eine Unwuchtmasse bilden. Insbesondere sind diesen Massenelementen 25 keine Gegenmassen zugeordnet, wie Fig. 2 zeigt. So sind bei dem Rotor 21 in der oberen Bildhälfte von Fig. 2 die Zwischenräume zwischen den Rotor-Polen 23 freigelassen.

Dementsprechend erzeugt der Rotor 21 aufgrund der unsymmetrischen Massenverteilung bei einer Rotation eine erhebliche Unwuchtkraft, die vorteilhafterweise direkt in die Bodenkontaktplatte 7 der Vibrationsplatte eingeleitet werden können und zur Bodenverdichtung dienen.

Der gezeigte Unwuchterreger 20 und der durch diesen verwirklichte Elektromotor sind in vorteilhafter Weise als Reluktanzmotor ausgebildet. Insbesondere kann dabei der Elektromotor als geschalteter Reluktanzmotor ausgebildet sein. Dementsprechend werden die Stator-Pole 24 nacheinander durchgeschaltet, nämlich in den Pol-Kombinationen 4-1, 5-2, 6-3. Zu diesem Zweck ist eine nicht gezeigte Steuereinrichtung vorgesehen, die unter anderem einen Frequenzumformer aufweisen kann.

Bei dem beschriebenen elektromagnetischen Unwuchterreger 20 ist der Rotor 21 somit sowohl als Antriebswelle des Motors als auch als Unwuchtwelle ausgebildet. Der Stator 22 dient als magnetischer Erreger des Rotors 21. Auf diese Weise ist ein sehr kompakter Aufbau des Unwuchterregers 20 möglich, bei dem Kosten, Gewicht und Bauvolumen in definierten Grenzen gehalten werden können.

Der durch den Unwuchterreger 20 verwirklichte Elektromotor kann bei einer vorteilhaften Variante die physikalischen Eigenschaften eines Reluktanzmotors nutzen, bei dem das Rotor-Drehmoment durch die Reluktanzkraft erzeugt wird. Der aktive Teil der Maschine ist dabei weder mit Magneten bestückt, noch gibt es am Rotor 21 elektrische Wicklungen, Kurzschlussstäbe oder ähnliches, wie dies bei Induktionsmotoren üblich wäre. Verschleißanfällige Schleifringe und Bürsten sind ebenfalls nicht vorhanden.

Die ausgeprägten Rotor-Pole 23 des Rotors 21 können dabei aus einem weichmagnetischen Material mit hoher Permeabilität bestehen, wie es auch in Elektromotoren zum Einsatz kommt.

Dabei sind insbesondere zwei Bauarten des Rotors 21 möglich: einerseits kann der Rotor 21 vollständig einstückig aus dem weichmagnetischen Material hergestellt sein. Bei einer Variante kann der Rotor 21 auch aus mehreren Komponenten zusammengebaut sein. Insbesondere ist es möglich, die Massenelemente 25 als eigene Bauteile aus Stahl zu fertigen und dann in geeigneter Weise mit den restlichen Komponenten des Rotors 21 zu verbinden.

Die Kommutierung des Rotors 21 erfolgt über die elektrisch erregten Stator-Pole 24, welche mit den Rotor-Polen 23 eine Wechselwirkung aufbauen. Das Arbeitsprinzip ist in diesem Fall das einer Synchronmaschine mit individuell der Unwucht zugeordnetem Frequenzumformer.

Der gezeigte Aufbau ermöglicht es, den Stator 22 aus Teilsegmenten zusammenzufügen, wobei es - wie bereits ausgeführt - nicht notwendig ist, den Stator 22 als Zylinder auszubilden, wie das bei klassischen Elektromotoren der Fall ist. Entscheidend für die Funktion der Maschine ist nur, dass durch das Weiterschalten der Statorspulen (Stator-Pole 24) eine Drehung des Rotors 21 erzeugt werden kann. Im Vergleich zu Induktionsmaschinen weist ein solcher Motor im synchronen Betriebsmodus einen höheren Wirkungsgrad auf.

Zusätzlich besteht die Möglichkeit, über die Anordnung und/oder Ansteuerung der magnetisch wirksamen Pole 23, 24 von Stator 22 und Rotor 21 eine Einstellung der Rotorlage zu realisieren. Wenn dann mehrere Unwuchtrotoren im Unwuchterreger 20 vorgesehen sind, lassen sich die Lagen der verschiedenen Unwuchtrotoren (Rotoren 21) zueinander einstellen, wodurch sich die Vibrationsplatte ohne zusätzliche Baugruppen (wie zum Beispiel eine hydraulische oder mechanische Unwuchtverstellung) in ihrer Bewegungsrichtung steuern lässt.

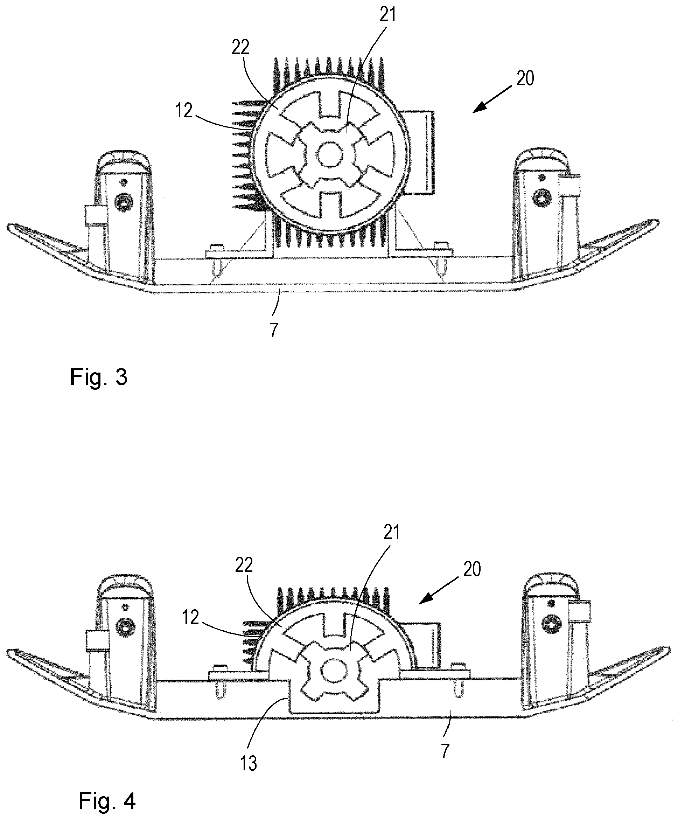

Fig. 3 zeigt ein nicht zur Erfindung gehörendes Beispiel für eine Bodenverdichtungsvorrichtung mit Bodenkontaktplatte 7 und darauf montiertem Unwuchterreger 20.

Der Unwuchterreger 20 weist den Rotor 21 auf, der in dem Stator 22 drehbar gelagert ist. Der Stator 22 ist in einem Erregergehäuse 12 untergebracht, das auf der Oberseite der Bodenkontaktplatte 7 befestigt ist.

Bei dem in Fig. 3 gezeigten Wirkprinzip ist der Abstand zwischen der Rotationsachse des Rotors 21 und der Unterseite der Bodenkontaktplatte 7 relativ groß.

Fig. 4 zeigt hingegen eine Variante, bei der dieser Abstand deutlich geringer ist.

Zu diesem Zweck ist der Stator 22 nur halbschalenförmig ausgebildet, so dass er den Rotor 21 lediglich über ein Kreissegment am Umfang umgibt, ähnlich wie in Fig. 2. Der Stator 22 erstreckt sich über einen Winkel von ca. 180 Grad.

Auf der Oberseite der Bodenkontaktplatte 7 ist zudem eine Ausnehmung 13 vorgesehen, in die der Rotor 21 hineinragt. Der Rotor 21 kann auf diese Weise sehr nah an die für die Verdichtung wirksame Unterseite der Bodenkontaktplatte 7 gebracht werden.

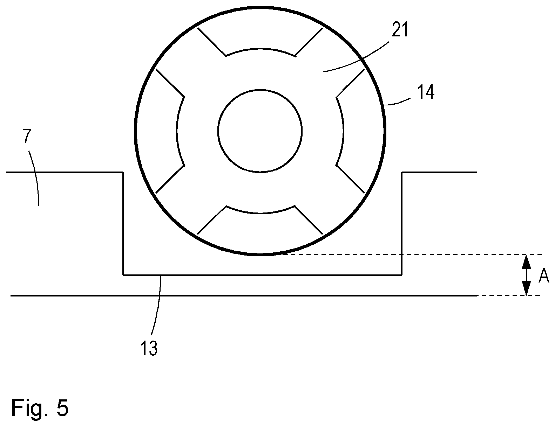

Insbesondere zeigt Fig. 5 in einer schematischen Ausschnittsvergrößerung von Fig. 4, dass der Rotor 21 an seinem Außenumfang von einem gedachten virtuellen Zylinder 14 umgeben sein kann, dessen Mantelfläche einen Abstand A zur Unterseite der Bodenkontaktplatte 7 aufweist. Dieser Abstand kann sehr gering sein und in einem Bereich von 10 mm bis 80 mm, z.B. bei ca. 35 mm liegen.

Bei der Variante von Fig. 4 ist das Erregergehäuse 12 hälftig ausgebildet und bildet die obere Hälfte, die auf der Bodenkontaktplatte 7 befestigt ist. Die untere Hälfte des Erregergehäuses 12 fehlt. Ihre Funktion wird direkt durch die Bodenkontaktplatte 7 selbst bzw. die Ausnehmung 13 übernommen.

Das Erregergehäuse 12 umschließt den ebenfalls nur hälftig ausgebildeten Stator 22.

Dadurch, dass sowohl beim Erregergehäuse 12 als auch beim Stator 22 die untere Hälfte nicht vorhanden ist, ist es möglich, die Position des Rotors 21 im Verhältnis zur Bodenkontaktplatte 7 nach unten zu verlegen und den Rotor 21 näher an der Unterseite der Bodenkontaktplatte 7 zu positionieren.

## Patentansprüche

1. Bodenverdichtungsvorrichtung, mit
- einer Obermasse (1);
- einer relativ zu der Obermasse (1) bewegbaren Untermasse (2), mit einer Bodenkontaktplatte (7) zur Bodenverdichtung;
- einer zwischen der Obermasse (1) und der Untermasse (2) wirkenden Schwingungsentkopplungsvorrichtung (3); und mit
- wenigstens einem zu der Untermasse (2) gehörenden Unwuchterreger (20) zum Beaufschlagen der Bodenkontaktplatte (7) mit einer Unwuchtkraft;
wobei
- die Bodenkontaktplatte (7) einen Teil eines Gehäuses des Unwuchterregers (20) bildet;
- der Unwuchterreger (20) einen Elektromotor aufweist, der einen Rotor (21) und einen den Rotor (21) wenigstens teilweise umschließenden Stator (22) aufweist;
- der Rotor (21) eine Unwuchtmasse (25) aufweist, die wenigstens teilweise bei einer Rotation des Rotors (21) an einer Innenseite des Stators (22) vorbeibewegbar ist;
- der Stator (22) den Rotor (21) nur über ein Kreissegment am Umfang umgibt;
- der Rotor (21) am Umfang verteilt mehrere Rotor-Pole (23) aufweist; und wobei
- der Stator (22) über einen Kreisbogen verteilt mehrere Stator-Pole (24) aufweist, um im Zusammenwirken mit den Rotor-Polen (23) eine elektromotorische Funktion zu verwirklichen.

2. Bodenverdichtungsvorrichtung nach Anspruch 1, wobei der Rotor (21) über einen Teil seines Umfangs eine zusätzliche Masse als Unwuchtmasse (25) aufweist, zu der bezüglich der Rotationsachse des Rotors (21) gegenüberliegend keine Gegenmasse zum Ausgleich der Unwuchtmasse vorgesehen ist.

3. Bodenverdichtungsvorrichtung nach einem der vorstehenden Ansprüche, wobei die die Unwuchtmasse (25) bewirkende zusätzliche Masse wenigstens 5 Prozent der Gesamtmasse des Rotors (21) beträgt.

4. Bodenverdichtungsvorrichtung nach einem der vorstehenden Ansprüche, wobei
- die Unwuchtmasse (25) als Masse ausgebildet ist, die sich über einen Teil des Umfangs des Rotors (21) erstreckt; und wobei
- auch in dem Umfangsbereich des Rotors (21), in dem die Unwuchtmasse (25) vorgesehen ist, wenigstens ein Rotor-Pol (23) ausgebildet ist.

5. Bodenverdichtungsvorrichtung nach einem der vorstehenden Ansprüche, wobei auch in dem Umfangsbereich des Rotors (21), in dem keine Unwuchtmasse (25) vorgesehen ist, wenigstens ein Rotor-Pol (23) ausgebildet ist.

6. Bodenverdichtungsvorrichtung nach einem der vorstehenden Ansprüche, wobei der Rotor (21) einteilig aus einem weichmagnetischen Material ausgebildet ist.

7. Bodenverdichtungsvorrichtung nach einem der vorstehenden Ansprüche, wobei die Stator-Pole (24) über den Innenumfang des Stators (22) verteilt sind.

8. Bodenverdichtungsvorrichtung nach einem der vorstehenden Ansprüche, wobei der Elektromotor als Reluktanzmotor ausgebildet ist.

9. Bodenverdichtungsvorrichtung nach einem der vorstehenden Ansprüche, wobei die Untermasse (2) wenigstens zwei Unwuchterreger (20) aufweist, die unabhängig voneinander durch eine Steuereinrichtung ansteuerbar sind.

10. Bodenverdichtungsvorrichtung nach Anspruch 9, wobei durch die Steuereinrichtung unterschiedliche Drehstellungen der jeweiligen Rotoren (21) in den Unwuchterregern (20) bewirkbar sind.

11. Bodenverdichtungsvorrichtung nach einem der vorstehenden Ansprüche, wobei der Unwuchterreger (20) auf einer Oberseite der Bodenkontaktplatte (7) angeordnet ist.

12. Bodenverdichtungsvorrichtung nach einem der vorstehenden Ansprüche, wobei
- die Bodenkontaktplatte (7) an ihrer Oberseite eine Ausnehmung aufweist; und wobei
- der Rotor (21) derart auf der Bodenkontaktplatte (7) positioniert ist, dass er wenigstens teilweise in die Ausnehmung hineinragt.

13. Bodenverdichtungsvorrichtung nach einem der vorstehenden Ansprüche, wobei eine Wandstärke zwischen einem Boden der Ausnehmung und einer Unterseite der Bodenkontaktplatte (7) in einem Bereich von 10 mm bis 30 mm liegt.

14. Bodenverdichtungsvorrichtung nach einem der vorstehenden Ansprüche, wobei ein Abstand (A) einer Mantelfläche eines den Rotor (21) umschreibenden virtuellen Zylinders zu einer Unterseite der Bodenkontaktplatte (7) in einem Bereich von 10 mm bis 80 mm, insbesondere in einem Bereich von 30 mm bis 40 mm, insbesondere bei 35 mm liegt.

## Claims

1. Ground compaction device, comprising
- an upper mass (1);
- a lower mass (2) which is movable relative to the upper mass (1) and has a ground contact plate (7) for ground compaction;
- a vibration decoupling device (3) acting between the upper mass (1) and the lower mass (2); and comprising
- at least one unbalance exciter (20), which is associated with the lower mass (2), for applying an unbalance force to the ground contact plate (7):
wherein
- the ground contact plate (7) forms a part of a housing of the unbalance exciter (20);
- the unbalance exciter (20) has an electric motor which has a rotor (21) and a stator (20) which at least partially encloses the rotor (21);
- the rotor (21) has an unbalance mass (25) which can be moved past an inner side of the stator (22) at least partially during a rotation of the rotor (21);
- the stator (22) surrounds the rotor (21) only over a circular segment on the circumference;
- the rotor (21) has a plurality of rotor poles (23) distributed on the circumference; and wherein
- the stator (22) has a plurality of stator poles (24) distributed over an arc of a circle in order to implement an electromotive function in cooperation with the rotor poles (23).

2. Ground compaction device as claimed in claim 1, wherein the rotor (21) has, over a part of its circumference, an additional mass as an unbalance mass (25), with respect to which no countermass to compensate for the unbalance mass is provided oppositely in relation to the axis of rotation of the rotor (21).

3. Ground compaction device as claimed in any one of the preceding claims, wherein the additional mass producing the unbalance mass (25) is at least 5 per cent of the total mass of the rotor (21).

4. Ground compaction device as claimed in any one of the preceding claims, wherein
- the unbalance mass (25) is configured as a mass which extends over a part of the circumference of the rotor (21); and wherein
- at least one rotor pole (23) is also formed in the circumferential region of the rotor (21) in which the unbalance mass (25) is provided.

5. Ground compaction device as claimed in any one of the preceding claims, wherein at least one rotor pole (23) is also formed in the circumferential region of the rotor (21) in which no unbalance mass (25) is provided.

6. Ground compaction device as claimed in any one of the preceding claims, wherein the rotor (21) is formed in one piece from a soft magnetic material.

7. Ground compaction device as claimed in any one of the preceding claims, wherein the stator poles (24) are distributed over the inner circumference of the stator (22).

8. Ground compaction device as claimed in any one of the preceding claims, wherein the electric motor is designed as a reluctance motor.

9. Ground compaction device as claimed in any one of the preceding claims, wherein the lower mass (2) has at least two unbalance exciters (20) which can be activated independently of one another by means of a control device.

10. Ground compaction device as claimed in claim 9, wherein different rotational positions of the respective rotors (21) in the unbalance exciters (20) can be effected by means of the control device.

11. Ground compaction device as claimed in any one of the preceding claims, wherein the unbalance exciter (20) is arranged on an upper side of the ground contact plate (7).

12. Ground compaction device as claimed in any one of the preceding claims, wherein
- the ground contact plate (7) has a recess on its upper side; and wherein
- the rotor (21) is positioned on the ground contact plate (7) such that it protrudes at least partially into the recess.

13. Ground compaction device as claimed in any one of the preceding claims, wherein a wall thickness between a bottom of the recess and an underside of the ground contact plate (7) is in a range of 10 mm to 30 mm.

14. Ground compaction device as claimed in any one of the preceding claims, wherein a distance (A) of a lateral surface of a virtual cylinder, which circumscribes the rotor (21), to an underside of the ground contact plate (7) is in a range of 10 mm to 80 mm, in particular in a range of 30 mm to 40 mm, in particular is 35 mm.

## Revendications

1. Dispositif de compactage du sol, comprenant
- une masse supérieure (1) ;
- une masse inférieure (2) mobile relativement à la masse supérieure (1), comprenant une plaque de contact avec le sol (7) pour le compactage du sol ;
- un dispositif de découplage des vibrations (3) agissant entre la masse supérieure (1) et la masse inférieure (2) ; et
- au moins un générateur de balourd (20) appartenant à la masse inférieure (2) pour appliquer une force de balourd à la plaque de contact avec le sol (7) ; dans lequel
- la plaque de contact avec le sol (7) forme une partie d'un boîtier du générateur de balourd (20) ; - le générateur de balourd (20) comprend un moteur électrique qui comprend un rotor (21) et un stator (22) entourant au moins partiellement le rotor (21) ;
- le rotor (21) comprend une masse de balourd (25) qui est au moins partiellement déplaçable lors d'une rotation du rotor (21) le long d'une face interne du stator (22) ;
- le stator (22) entoure le rotor (21) uniquement sur un segment circulaire à la circonférence ;
- le rotor (21) comprend, répartis sur la circonférence, plusieurs pôles de rotor (23) ; et
- le stator (22) comprend, répartis sur un arc de cercle, plusieurs pôles de stator (24), afin de réaliser une fonction électromotrice en coopération avec les pôles de rotor (23).

2. Dispositif de compactage du sol selon la revendication 1, dans lequel le rotor (21) comprend, sur une partie de sa circonférence, une masse supplémentaire en tant que masse de balourd (25), pour laquelle, par rapport à l'axe de rotation du rotor (21), aucune contre-masse n'est prévue en face pour compenser la masse de balourd.

3. Dispositif de compactage du sol selon l'une des revendications précédentes, dans lequel la masse supplémentaire constituant la masse de balourd (25) représente au moins 5 pour cent de la masse totale du rotor (21).

4. Dispositif de compactage du sol selon l'une des revendications précédentes, dans lequel
- la masse de balourd (25) est réalisée comme une masse s'étendant sur une partie de la circonférence du rotor (21) ; et dans lequel
- au moins un pôle de rotor (23) est également réalisé dans la zone de circonférence du rotor (21) où la masse de balourd (25) est prévue.

5. Dispositif de compactage du sol selon l'une des revendications précédentes, dans lequel au moins un pôle de rotor (23) est également réalisé dans la zone de circonférence du rotor (21) où aucune masse de balourd (25) n'est prévue.

6. Dispositif de compactage du sol selon l'une des revendications précédentes, dans lequel le rotor (21) est réalisé en une seule pièce à partir d'un matériau ferromagnétique doux.

7. Dispositif de compactage du sol selon l'une des revendications précédentes, dans lequel les pôles de stator (24) sont répartis sur la circonférence interne du stator (22).

8. Dispositif de compactage du sol selon l'une des revendications précédentes, dans lequel le moteur électrique est réalisé comme un moteur à réluctance.

9. Dispositif de compactage du sol selon l'une des revendications précédentes, dans lequel la masse inférieure (2) comprend au moins deux générateurs de balourd (20) qui peuvent être commandés indépendamment l'un de l'autre par un dispositif de commande.

10. Dispositif de compactage du sol selon la revendication 9, dans lequel différentes positions angulaires des rotors (21) respectifs dans les générateurs de balourd (20) peuvent être réalisées par le dispositif de commande.

11. Dispositif de compactage du sol selon l'une des revendications précédentes, dans lequel le générateur de balourd (20) est disposé sur une face supérieure de la plaque de contact avec le sol (7).

12. Dispositif de compactage du sol selon l'une des revendications précédentes, dans lequel
- la plaque de contact avec le sol (7) comprend un évidement sur sa face supérieure ; et dans lequel
- le rotor (21) est positionné sur la plaque de contact avec le sol (7) de telle sorte qu'il s'étend au moins partiellement dans l'évidement.

13. Dispositif de compactage du sol selon l'une des revendications précédentes, dans lequel une épaisseur de paroi entre un fond de l'évidement et une face inférieure de la plaque de contact avec le sol (7) se situe dans une plage de 10 mm à 30 mm.

14. Dispositif de compactage du sol selon l'une des revendications précédentes, dans lequel une distance (A) entre une surface latérale d'un cylindre virtuel entourant le rotor (21) et une face inférieure de la plaque de contact avec le sol (7) se situe dans une plage de 10 mm à 80 mm, en particulier dans une plage de 30 mm à 40 mm, en particulier à 35 mm.
